# EUROPEAN PATENT APPLICATION

(11) **EP 0 736 537 A2**
(43) Date of publication of application: **09.10.1996**
(21) Application number: 95114712.3
(22) Date of filing: 19.09.1995
(51) Int. Cl.: C07F 7/08, C08G 77/48

(54) **Method for preparing a hybrid telechetic organodisilanol and polymers thereof**

(30) Priority: 06.04.1995 IT MI950701
(71) Applicant: DOW CORNING CORPORATION, Midland, Michigan 48686-0994 (US)
(72) Inventor: Boutevin, Bernard, F-34000 Montpellier (FR); Guida-Pietrasanta, Francine, F-34000 Montpellier (FR); Ratsimihety, Amedee, E.N.S.C.M., F-34053 Montpellier Cedex 1 (FR); Caporiccio, Gerardo, I-20149 Milano (IT)
(74) Representative: Sama, Daniele, Dr.

(57) **Abstract**

A method for preparing telechelic hybrid organo-disilanol

HO-R¹R²SiCₙH₂ₙRCₙH₂ₙSiR¹R²-OH (I)

comprising (A) reacting a dihydrosilane

R¹R²SiH₂ (II)

with a diene

CₙH₂ₙ₋₁RCₙH₂ₙ₋₁ (III)

to provide a telechelic hybrid dihydro silane

H-R¹R²SiCₙH₂ₙRCₙH₂ₙSiR¹R²-H (IV)

and (B) reacting IV with a buffered aqueous solution in the presence of a palladium catalyst, wherein R¹, R² are C₁-C₁₂ alkyl, C₃-C₁₂ halogenated alkyl, phenyl, alkylphenyl, monovalent radicals of (co)telomers of fluorinated organic monomers; n is 2 or 3; -CₙH₂ₙ₋₁ is selected from -CH=CH₂ and -CH₂-CH=CH₂; R is selected from -O(CₜH₂ₜO)ₘ- wherein t is 2-12 and m is 1-6, C₂-C₁₂ divalent hydrocarbon groups, divalent fluorohydrocarbon groups and derivatives of telechelic divalent fluoro(co)telomers.
There are also disclosed hybrid-sila-organo-siloxane (co)polymers obtained by polycondensation of (I) with itself or with a diorganosilane such as R¹R²SiCl₂.

## Description

The present invention relates to a method for preparing a hybrid organodisilanol and hybrid siloxane (co)polymers thereof. More particularly, the invention involves a method wherein a diorgano dihydrosilane (dihydrosilane) is used to hydrosilylate a diene in order to provide a telechelic hybrid-α, ω-organo-dihydro silane (telechelic hybrid dihydrosilane) which, in turn, is converted in presence of a buffered water solution and in the presence of a palladium catalyst to the telehelic hybrid-α,ω-organo-disilanol, eventually condensed to the corresponding hybrid poly-α,ω-sila-organo-siloxane, here intended as hybrid silicone or hybrid-sila-organo-siloxane polymer.

The prior art preparation of hybrid polysiloxanes generally includes the following steps:

A silane is prepared according e.g. to the chemical equation:

(CH₃)₂SiH₂ + (CH₃)₂SiCl₂ → 2(CH₃)₂Si(Cl)H (i)

wherein the reaction is carried out in the presence of, e.g., tetraisobutylamonium bromide. The product of this reaction, e.g. a dimethylhydrochlorosilane, is then reacted to endcap a telechelic vinyl-terminated compound, as represented, e.g., by equation (ii)

2(CH₃)₂Si(Cl)H + CH₂=CH-C₂H₄-CH=CH₂ → → Cl(CH₃)₂Si-C₆H₁₂-Si(CH₃)₂Cl (ii)

the reaction being carried out in the presence of a platinum catalyst. The resultant chlorine-terminated compound is then hydrolized and polycondensed to form the corresponding hybrid-sila-organo-siloxane polymer. The above hydrolysis and polycondensation can also be accomplished in the presence of another diorganodichlorosilane, e.g. Si(CH₃)₂Cl₂, and these mixtures may be condensed to provide copolymers. It has been observed that, even though the reaction represented by equation (ii) is relatively efficient (yield is in the range of 80 to 90%), the reaction according to equation (i) is relatively inefficient (yields observed are in the 40 to 60% range).
The overall yield for formation of hydrolysis products is therefore in the general range of about 32 to 54%. Since the polymers and copolymers produced from these hydrolyzates have utility in such diverse applications as lubricants, rubbers and sealants, there is motivation to improve the process for their manufacture.

We have found a highly successfull method which can be employed in the production of the above mentioned hybrid polymers. Our method results in an improved overall yield for the preparation of a telechelic hybrid-α,ω-organo-disilanol compound which is a precursor for the hybrid-sila-organo-siloxane polymer.

Our invention is a method for preparing a telechelic hybrid-α,ω-organo-disilanol compound having the formula

HO-R¹R²SiCₙH₂ₙRCₙH₂ₙSiR¹R²-OH (I)

The compound of formula (I) is prepared by first reacting a dihydrosilane of the formula

R¹R²SiH₂ (II)

with a diene of the formula

CₙH₂ₙ₋₁RCₙH₂ₙ₋₁ (III)

to provide a telechelic hybrid-α,ω-organo-dihydro silane of the formula

H-R¹R²SiCₙH₂ₙRCₙH₂ₙSiR¹R²-H (IV)

The telechelic dihydrosilane compound (IV) is then converted in presence of a buffered water solution and in the presence of a palladium catalyst onto the hybrid organodisilanol (I) compound of this invention.

In the above formulae:
R¹ and R², equal or different between them, represent a monovalent organic group selected from the group consisting of alkyl radicals having from 1 to 12 carbon atoms, halogenated alkyl radicals having from 3 to 12 carbon atoms, such as 3,3,3-trifluoropropyl, phenyl and C₁-C₄ alkyl-phenyl radicals;
-CₙH₂ₙ₋₁ a group selected from -CH=CH₂ and -CH₂-CH=CH₂;
-CₙH₂ₙ- represents a linear divalent radical wherein n is 2 or 3;
R represents a divalent organic group as below defined, with the proviso that when in formulas (I), (II) and (IV) at least one of R¹ and R² is a halogenated alkyl, the halogen substitution must not be on the alpha or beta carbon atom with respect to the silicon atom and with the proviso that in formulas (I), (II) and (IV) there should be no more than one phenyl group per silicon atom.

At least one of R¹ and R² groups can also be a monovalent radical derived from telomers or cotelomers of fluorinated organic olefins and is illustrated by such groups as:
(i) alkylene-terminated monovalent homotelomers selected from telomers of chlorotrifluoroethylene, tetrafluoroethylene, vinylidene fluoride and trifluoroethylene;
(ii) cotelomers selected from cotelomers of chlorotrifluoroethylene and hexafluoropropene;
(iii) cotelomers of tetrafluoroethylene and one member selected from hexafluoropropene, 1-H-pentafluoropropene and 2-H-pentafluoropropene;
(iv) cotelomers of vinylidene fluoride and one member selected from said hexa- and pentafluoropropenes;
(v) cotelomers of tetrafluoroethylene and a perfluoroalkyl vinyl ether;
(vi) cotelomers of tetrafluoroethylene, chlorotrifluoroethylene and a perfluoroalkyl vinyl ether; and
(vii) cotelomers of tetrafluoroethylene, chlorotrifluoroethylene and hexafluoropropene.

The above telomers and cotelomers are bonded to the silicon atom by a divalent, linear, non-halogenated, alkylene radical containing 2, 3 or 4 carbon atoms.

The divalent organic group R is preferably a group -O(CₜH₂ₜO)ₘ- wherein t is an integer from 2 to 12, preferably from 2 to 6 and m is an integer from 1 to 6, preferably from 1 to 3, most preferably the group R is selected from the structures -O(C₂H₄O)ₘ-, -O(C₃H₆O)ₘ-, -O(C₄H₈O)ₘ-, and -O(C₆H₁₂O)ₘ-
in which m has the above defined meaning. R can also be a divalent group selected from branched or linear divalent hydrocarbon groups having from 2 to 12 and preferably from 2 to 8 carbon atoms, branched or linear divalent fluorohydrocarbon groups or derivatives of telechelic divalent fluorotelomers or cotelomers. The preferred telechelic divalent fluorinated telomers or cotelomers may be represented by the formula:

-(R⁶)CFCF₂-(CₚF₂ₚ)_{q}(C₂ClF₃)ᵣ-R_{f}-(C₂ClF₃)ᵣ-(CₚF₂ₚ)_{q}-CF₂CF(R⁶)-

in which R_{f} represents a perfluoroalkylene radical containing from 2 to 6 carbon atoms, R⁶ is fluorine or trifluoromethyl, the value of p is 2 or 3, r is 0 or a positive integer from 1 to 6, q is 0 or a positive integer from 1 to 6 and (r+q) is from 2 to 12.

The dienes of formula (III) which contain the above described preferred telechelic divalent fluorinated telomer or cotelomer R groups are known in the art and their preparation is illustrated in US-A 5,110,973. Other dienes encompassed by formula (III) are also known in the art and description thereof is considered unnecessary.

The method of this invention begins with the preparation of the diorgano dihydrosilane shown in formula (II).

This is accomplished by reacting a diorganodihalosilane of the structure R¹R²SiQ₂, in which R¹ and R² have their previously defined meanings and Q is chlorine or bromine, with an excess of lithium aluminum hydride (LiAlH₄).
Preferably, the halogens of the diorganodihalosilane are chlorine and the reaction is carried out under reflux in a solvent (e.g., ethyl ether or tetrahydrofuran) and under an inert gas atmosphere (e.g., nitrogen). The yield for this reaction is quite high, generally in the range of 90 to 95%.

The dihydrosilane (II) is then reacted with diene (III) in the presence of a hydrosilylation catalyst to prepare the telechelic hybrid dihydro compound (IV). At least two moles of (II) are used for each mole of (III). Preferably, an excess of the dihydrosilane (II) is used (e.g., 20% excess) to complete capping of the unsaturated ends of the diene. This reaction may also preferably be carried out in a solvent, such as octane, hexane, toluene or xylene and under an inert gas atmosphere such as argon, nitrogen or helium and preferably at a temperature of 20 to 130°C. This reaction typically has a yield in the range of 80 to 90%.

The hydrosillylation catalyst is exemplified by platinum catalysts, such as platinum black, platinum supported on silica micropowder, platinum supported on carbon powder, chloroplatinic acid, alcohol solutions of chloroplatinic acid, platinum/olefin complexes and platinum/alkenylsiloxane complexes. For the present invention, this catalyst is preferably platinum supported on carbon. It is added in a catalytic quantity to promote the above hydrosilylation reaction, typically in an amount sufficient to give 0.1 to 1,000 ppm (parts per million) by weight catalyst metal in the combination of components (II) and (III).

The telechelic hybrid dihydro compound (IV) is then converted in presence of a buffered water solution and in the presence of a palladium catalyst onto the hybrid organodisilanol (I). In this reaction, the amount of water employed must be sufficient to convert the SiH functionality of component (IV) and is preferably used in excess (e.g., up to 400% excess on a molar basis). In this reaction the use of a buffer solution is preferred in order to maintain a slightly basic reaction environment. Preferably, the reaction solution also contains a water-miscible solvent, such as dioxane or tetrahydrofuran and it is buffered with a basic salt or salt/base combination.
The catalyst used in this reaction is preferably a powder which consists essentially of palladium on an alumina (i.e., Al₂O₃) support. This reaction typically has a yield in the range 90 to 95%.

The organodisilanol compound (I) prepared according to our method may then be condensed, either with itself or, preferably in the presence of a base with a diorganosilane having the formula

R¹R²SiX₂ (V)

to form a homopolymer or a copolymer, respectively, by methods well known in the art. In formula (V), R¹ and R² have their previously defined meanings and X is a hydrolizable group, such as chlorine, alkoxy, oxime and acetoxy. Thus, a telechelic hybrid-α,ω-organo-disilanol (I) can be co-condensed with a silane of the formula R¹R²SiCl₂ or a silane of the formula R¹R³SiCl₂ in which R¹ and R² have the above defined meanings and R³ can be a vinyl radical or an alkenyl radical, in the presence of a base e.g. pyridine when X is chlorine, to form a copolymer consisting essentially of the respective units. When at least one of the siloxane units so employed contains a vinyl or an alkenyl radical, the resulting copolymer can be crosslinked through this reactive functionality.

The type of polymers and copolymers contemplated herein includes such systems as those represented by the formulae (A)ₓ, (AB)ₓ, (ABA)ₓ, (BAB)ₓ, in which the subscrits x denote the corresponding degree of polymerization of each system and have a value ranging from 5 to 3,000, preferably from 10 to 1,000, -A- denotes the residue of compound (I) and has the formula

-R¹R²SiCₙH₂ₙRCₙH₂ₙSiR¹R²O- (VI)

and -B- denotes the residue of siloxane units derived from the compound (V) and has the formula -R¹R²SiO- where R¹, R², R and n have their previously defined meanings.
Such repeating units (A)ₓ, (AB)ₓ, (ABA)ₓ, (BAB)ₓ can be alternated with some reactive units type (R¹R³SiO)_{w} where the ratio w/x ranges from 0.001 to 0.05.

The end groups of these polymers or copolymers can be any of the known triorganosiloxy groups known in the art and these may be introduced by adding a capping agent in the above condensation step. Without such a capping component, the end groups would comprise the silanol groups inherently remaining after the condensation step. Examples of suitable end groups include trimethylsiloxy, dimethylphenylsiloxy and diethylphenylsiloxy, dimethylvinylsiloxy, dimethylhexenylsiloxy, dimethylhydroxysiloxy, dimethylhydrogensiloxy, dimethylalkoxysiloxy, methyldialkoxysiloxy and trialkyoxysiloxy.

Of the (co)polymers described above there are novel the (co)polymers containing the unit

-R¹R²SiCₙH₂ₙRCₙH₂ₙSiR¹R²O- (VIa)

and, optionally the unit -R¹ₐ R²ₐ SiO- and/or -R¹ₐ R³ₐ SiO- wherein:
R¹ and R², equal or different between them, are C₁-C₁₂ alkyls, phenyl or C₁-C₄ alkyl-phenyl;
-CₙH₂ₙ- is a linear divalent radical wherein n is 2 or 3;
R is selected from the group consisting of:
   a1) -O(CₜH₂ₜO)ₘ- wherein t is an integer from 2 to 12, preferably from 2 to 6, m is an integer from 1 to 6, preferably from 1 to 3, preferably R is selected from the structures -O(C₂H₄O)ₘ-, -O(C₃H₆O)ₘ-, -O(C₄H₈O)ₘ-, -O(C₆H₁₂O)ₘ- wherein m is from 1 to 3, with the proviso that no more than one phenyl group per silicon atom is present in the repeating unit (VIa) and
   b1) branched or linear divalent hydrocarbon groups having from 2 to 8, preferably from 2 to 4 carbon atoms, with the proviso that in the repeating unit (VIa) no more than one phenyl group and no more than one methyl group per silicon atom is present and when R¹ is methyl then R² is C₅-C₁₂ alkyl, phenyl or C₁-C₄ alkyl-phenyl;
      R¹ₐ and R²ₐ are independently selected from C₁-C₁₂ alkyls, C₃-C₁₂halogenated alkyls, phenyl, C₁-C₄ alkyl-phenyl, monovalent radicals derived from (co)telomers of fluorinated organic olefins;
      R³ₐ is a vinyl or an alkenyl radical.

The above novel hybrid siloxane (co)polymers include the systems
(A)ₓ, (AB)ₓ, (ABA)ₓ, (BAB)ₓ, wherein
- -A-: represents the unit of formula (VIa);
- -B-: represents -R¹ₐ R²ₐ SiO- and/or -R¹ₐ R³ₐ SiO- units;
- x: represents the polymerization degree of each system having a value ranging from 5 to 3,000, preferably from 10 to 1,000.

The Applicant has unexpectedly found that the above novel (co)polymers show a very low glass transition temperature combined with the absence of any first order transition phenomena at temperatures higher than -30°C. The novel hybrid silicones find application for the preparation of low temperature lubricants, rubbers and sealants.

This property is completely unexpected since it has been found that for the class of the hybrid tetramethyl-sila-alkylene-siloxanes were R is (b1) and R¹=R²=CH₃ a first order transition appears evident near room temperature by DSC analysis. This means that these (co)polymers cannot be used at low temperatures; more in detail if these products present a consistency of an oil, they cannot be used as lubricants for low temperatures since they become too viscous or heterogeneous and if the product presents a consistency of a rubber, it cannot be used at low temperatures since it become brittle.

The novel hybrid silicones obtained according to the present invention and containing the repeating unit of formula (VIa) in which R is (b1) show a glass transition temperature, at the DSC analysis, at least of -70°C or lower without showing the presence of any phenomena of first order transition at a temperature higher than -30°C or near room temperature.

For instance in the polymer of formula (2d) of example 2 according to the invention a first order transition appears at -50°C combined with a glass transition temperature of -80°C, while in the polymer in which the -C₈H₁₇ alkyl linked to each silicon atom of said formula (2d) is substituted by -CH₃, a first order transition appears at about +10°C combined with a higher glass transition temperature.

Further it has been found unexpectedly, by experiments carried out by the Applicant, that the novel hybrid (co)polymers according to the present invention, containing the recurring unit of formula (VIa) in which R is a (poly)oxyalkylene group, show a glass transition temperature much lower with respect to that of silicone oils known as silicone-glycol copolymers (see D. Klamann, Lubricants - Verlag Chemie Ed. 1984, page 140).

The following examples are presented to further illustrate this invention. All parts and percentages are on a weight basis and all measurements were obtained at 25°C, unless otherwise indicated.

### Example 1

### Preparation of (C₈H₁₇)(CH₃)SiH₂:

Methyl octyl dihydrosilane (C₈H₁₇)(CH₃)SiH₂ (1a) was prepared from the corresponding dichlorosilane (912 g) by quantitative reduction-with LiAlH₄ (160 g), at reflux in ether (3 liters) for 19 hours. The silane was distilled at 78°C and 2.67 kPa (20 torr) and was characterized by IR absorption at 2132 cm⁻¹ and by ²⁹Si NMR, giving a peak centered at -33.5 ppm (CDCl₃), which confirmed the structure of the product as (C₈H₁₇)(CH₃)SiH₂ (1a).

### Hydrosilylation of H₂C=CH-C₂H₄-CH=CH₂ with (C₈H₁₇)(CH₃)SiH₂:

The hydrosilylation was performed in a steel reactor. 0.486 g of dry 5% Pt/C and 3.44 g of n-octane were placed in the reactor, together with 21.2 g (0.135 mole) of (C₈H₁₇)(CH₃)SiH₂ and 0.061 mole of 1,5-hexadiene. The reactor was sealed and the mixture was heated at 130°C, for 19 hours. After cooling, filtration and distillation, the telechelic hybrid dihydrosilane

(H)Si(C₈H₁₇)(CH₃)-C₆H₁₂-Si(C₈H₁₇)(CH₃)H (1b)

was isolated by distillation at 175°C and 5.3 Pa (4x10⁻² torr). Gas-liquid chromatography (GLC) performed on the impure product indicated a yield of about 90% on a weight basis.
Conversion of the hybrid dihydrosilane (1b) to the disilanol:

A flask (under argon) was charged with 0.5 g of dry 5% Pd/Al₂O₃, 50 ml of 1,4-dioxane and 4.5 ml of a buffer solution of NaH₂PO₄/H₂O and 0.1 N NaOH and 0.025 mole of the hybrid dihydrosilane (1b) previously prepared was added.
The mixture was heated at 30 to 40°C, for 24 hours. After cooling, it was diluted with 10 ml of diethylether, filtered and the solvent distilled off. The residue was identified as a telechelic hybrid-organo-disilanol of the structure

HOSi(C₈H₁₇)(CH₃)-C₆H₁₂-Si(C₈H₁₇)(CH₃)(OH) (1c)

which had a glass transition temperature of -70°C. The yield was about 90%. The product was also characterized by IR and NMR to confirm the above structure.
Condensation of the hybrid disilanol and preparation of the hybrid-sila-organo-siloxane polymers.

A flask (under argon) was charged with 0.02 mole of the hybrid-organo-disilanol (1c) and 10 ml of anhydrous toluene and 4 drops of tetramethylguanidine trifluoroacetate were added. The mixture was heated in toluene at reflux (110°C) for 19 hours. After cooling, it was washed with a 10% aqueous solution of NaHCO₃. The solvent was distilled off and the residue was identified as the hybrid silicone (yield = 95%). This resulting polymer having the structure

HO-[Si(C₈H₁₇)(CH₃)-C₆H₁₂-Si(C₈H₁₇)-(CH₃)O]ₙH (1d)

had a glass transition temperature of -83°C (differential scanning calorimetry at 10°C/minute) and any first order transition did not appear at DSC. A number average molecular weight of about 20,000 was measured (GPC in tetrahydrofuran using a polystyrene standard).

### Example 2

In a procedure similar to that of Example 1, a diene of the structure

H₂C=CH-C₆H₁₂-CH=CH₂ (2a)

was reacted with the dihydrosilane (C₈H₁₇)(CH₃)SiH₂.
The hydrosilylation was performed in a glass flask under argon using 0.243 g of dry 5% Pt/C and 1.72 g of n-octane along with 21.2 g (0.135 mole) of (C₈H₁₇)(CH₃)SiH₂ and 0.045 mole of 1,9-decadiene. The mixture was heated at 130°C for 2 hours and, after cooling, another portion of 0.243 g Pt/C in 1.72 g of n-octane was added. The mixture was again heated at 130°C for 12 hours and, after filtration and distillation, the hybrid dihydrosilane of the formula

(H)Si(C₈H₁₇)(CH₃)-C₁₀H₂₀-Si(C₈H₁₇)(CH₃)H (2b)

was isolated by distillation. The yield of (2b) by GLC analysis of the undistilled product was about 90%.

The hybrid dihydrosilane (2b) was converted to the corresponding disilanol according to the procedure of Example 1 to provide a compound having a glass temperature of -70°C with a confirmed structure

HOSi(C₈H₁₇)(CH₃)-C₁₀H₂₀-Si(C₈H₁₇)(CH₃)(OH) (2c)

The yield was 91%.

The above hybrid disilanol (2c) was condensed by the procedure of Example 1 to provide a polymer of the structure

HO-[Si(C₈H₁₇)(CH₃)-C₁₀H₂₀-Si(C₈H₁₇)(CH₃)O]ₙ-H (2d)

which polymer showed a glass transition temperature of - 80°C; a very small first order transition appeared at -50°C. A number average molecular weight of about 23,000 was measured (i.e., a degree of polymerization [DP] of 49).

### Example 3

### Synthesis of CH₂=CH-CH₂-O-C₆H₁₂-O-CH₂-CH=CH₂:

1,6-hexanediol (HO-C₆H₁₂-OH) was reacted with a 150% excess of allyl chloride (ClCH₂-CH=CH₂) to provide a diene of the formula

CH₂=CH-CH₂-O-C₆H₁₂-O-CH₂-CH=CH₂ (3a)

The reaction was run at 40°C for 19 hours in the presence of a tetrabutylammonium hydrogen sulfate (at 10% of the moles of the diol) and in the presence of a 50% aqueous NaOH solution, the latter material being used to neutralize the byproduct HCl. The yield of this reaction was about 91%.
The diene (3a) had a boiling point of 85°C at 20.3 kPa (0.2 mbar).

### Synthesis of

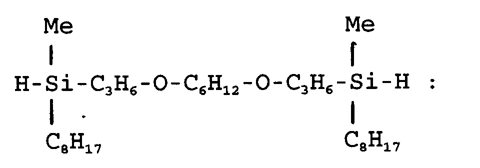

Diene (3a) was reacted with a 100% excess of a dihydrosilane of the formula Me(C₈H₁₇)SiH₂, wherein Me hereinafter denotes a methyl radical. This silylation reaction was carried out under an argon atmosphere in the presence of a catalyst consisting of platinum supported on carbon at 130°C for 9 hours, as in Example 1. The resulting hybrid dihydro silane, obtained in about 90% yield, had the structure 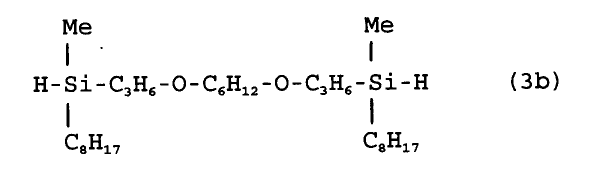 Analysis of (3b) was obtained as follows:
IR: 2106 cm⁻¹ (SiH)
¹H NMR (CDCl₃): 0.05 (d)(3H)SiCH₃; 0.6(4H)SiCH₂; 0.9(3H)CH₂CH₃; 1.3(12H) intermediate (CH₂)₆ of octyl; 1.6(m)(6H)SiCH₂CH₂ and OCH₂CH₂CH₂; 3.4(4H)OCH₂; 3.8(1H)SiH
²⁹Si NMR (CDCl₃): - 9.35 (s) (¹H irradiation)
   - 9.35 (d) (without ¹H irradiation)

### Synthesis of

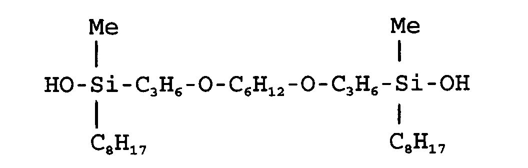

The above hybrid dihydro silane (3b) was reacted with a buffered water solution using a 5% palladium supported on alumina catalyst. Again, 1,4-dioxane and the buffer solution of NaH₂PO₄/H₂O and 0.1N NaOH were used in the proportions given in Example 1. The mixture was heated at 30 to 40°C for 24 hours and, after cooling, it was diluted with 10 ml of ether, filtered and solvent distilled off to provide a hybrid organo-disilanol of the structure 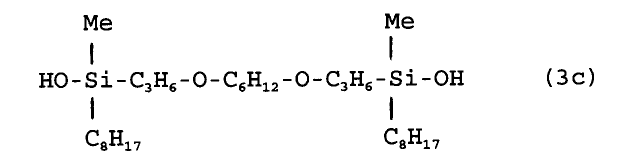 This disilanol compound was obtained in 92% yield, had a glass temperature of -82°C, and was characterized as follows:
IR: 3416 cm⁻¹ (SiOH)
¹H NMR (CDCl₃): 0.1(s)(3H)SiCH₃; 0.6(4H)SiCH₂; 0.9(3H)CH₂CH₃; 1.3(12H) intermediate (CH₂)₆ of octyl; 1.6(m)(6H)SiCH₂CH₂ and OCH₂CH₂CH₂; 3.4(4H)OCH₂
²⁹Si NMR (CDCl₃): + 17.5(s) = SiOH

### Synthesis of

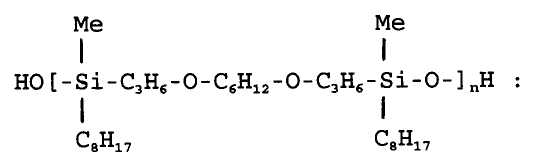

The above hybrid disilanol compound (3c) was condensed to a polymer under an argon atmosphere by refluxing in toluene for three days in the presence of tetramethylguanidine trifluoroacetate, as in the preparation of the polymer of Example 1.
The following structure was obtained in 95% yield 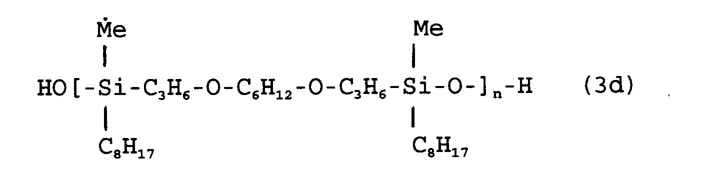 The polymer (3d) had a glass transition temperature of -82°C and any first order transition did not appear at DSC analysis. A number average molecular weight of 12,000 (GPC using polystyrene calibration) was measured (this corresponds to an average DP of n = 22). The ²⁹Si NMR spectrum of (3d) showed a peak at +7.1 ppm (s) in CDCl₃, in agreement with a polymeric structure containing the group C-Si-O-Si-C.

### Example 4

Following the same procedure as for example 3, but starting from diallyl ether of the formula

H₂C=CH-CH₂O-C₄H₈-OCH₂-CH=CH₂ (4a)

and methyl octyl dihydrosilane of the formula

H₂Si(CH₃)C₈H₁₇

there was prepared the telechelic hybrid-organo-dihydro silane of formula 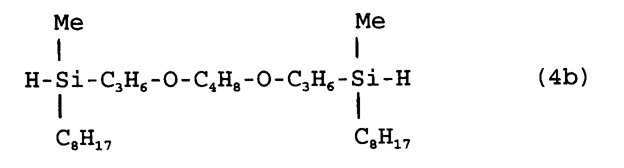 obtained in 80% yield, which by analysis showed IR, ¹H NMR and ²⁹Si NMR spectra similar to those of compound (3b) of example 3.
The above hybrid dihydro silane (4b) was hydrolized as in example 3 in the presence of a buffer solution of NaH₂PO₄ and 0.1 N NaOH, and yielded 93% of the telechelic hybrid-organodisilanol of the formula 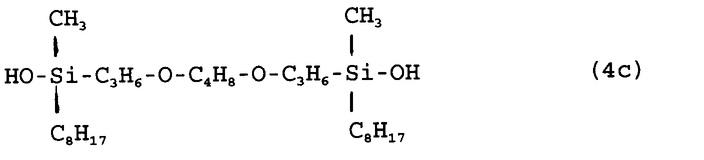 which showed IR, ¹H NMR and ²⁹Si NMR spectra similar to those of compound (3c) of example 3.
The hybrid disilanol (4c) was condensed as in example 3, in the presence of tetramethylguanidine trifluoroacetate to give the hybrid-sila-organo-siloxane polymer of the formula: 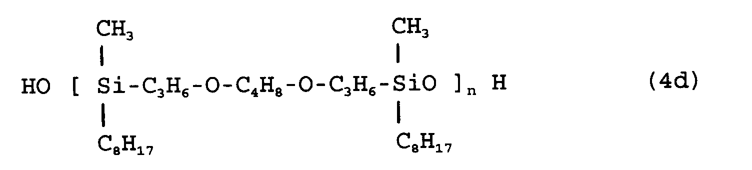 The polymer (4d) had a glass transition temperature of -85°C and no first order transition appeared. A number average molecular weight corresponding to an average DP of n = 20 was measured.
The ²⁹Si NMR spectrum showed a peak at +7.2 ppm (s), in agreement with a polymeric structure containing the group C-Si-O-Si-C.

## Claims

1. A method for preparing a telechelic hybrid-α,ω-organodisilanol compound having the formula
HO-R¹R²SiCₙH₂ₙRCₙH₂ₙSiR¹R²-OH (I)
said method comprising:
(A) reacting a dihydrosilane of the formula
R¹R²SiH₂ (II)
with a diene of the formula
CₙH₂ₙ₋₁RCₙH₂ₙ₋₁ (III)
to provide a telechelic hybrid-α,ω-organo-dihydro silane of the formula
H-R¹R²SiCₙH₂ₙRCₙH₂ₙSiR¹R²-H (IV); and
(B) reacting said hybrid dihydro silane (IV) with a buffered water solution in the presence of a palladium catalyst, wherein R¹ and R² are independently selected from alkyl radical having 1 to 12 carbon atoms, halogenated alkyl radicals having 3 to 12 carbon atoms, phenyl, C₁-C₄ alkyl-phenyl radicals and monovalent radicals derived from telomers or cotelomers of fluorinated organic olefins, n is 2 or 3, -CₙH₂ₙ₋₁ represent a group selected from -CH=CH₂ and -CH₂-CH=CH₂ and R is a divalent organic group selected from the group consisting of:
a) -O(CₜH₂ₜO)ₘ- wherein t is an integer from 2 to 12 and m is an integer from 1 to 6;
b) branched or linear divalent hydrocarbon groups having from 2 to 12 carbon atoms;
c) branched or linear divalent fluorohydrocarbon groups;
d) derivatives of telechelic divalent fluorotelomers or cotelomers;
with the proviso that in formulas (I), (II) and (IV) there is no more than one phenyl group per silicon atom and when at least one of R¹ and R² is a halogenated alkyl, the halogen is not on the carbon atom in the alpha or beta position with respect to the silicon atom.

2. The method according to claim 1 wherein R¹ and R² are independently selected from the group consisting of monovalent radicals derived from telomers or cotelomers of fluorinated organic olefins.

3. The method according to claim 2 wherein R¹ and R² are independently selected from the group consisting of (i) alkylene-terminated monovalent homotelomers selected from telomers of chlorotrifluoroethylene, tetrafluoroethylene, vinylidene fluoride and trifluoroethylene; (ii) cotelomers selected from cotelomers of chlorotrifluoroethylene and hexafluoropropene; (iii) cotelomers of tetrafluoroethylene and one member selected from hexafluoropropene, 1-H-pentafluoropropene and 2-H-pentafluoropropene; (iv) cotelomers of vinylidene fluoride and one member selected from said hexa- and pentafluoropropenes; (v) cotelomers of tetrafluoroethylene and a perfluoroalkyl vinyl ether; (vi) cotelomers of tetrafluoroethylene, chlorotrifluoroethylene and a perfluoroalkyl vinyl ether; and (vii) cotelomers of tetrafluoroethylene, chlorotrifluoroethylene and hexafluoropropene.

4. The method according to claim 1 wherein R is selected from divalent fluorohydrocarbon groups and derivatives of telechelic divalent fluorotelomers or cotelomers.

5. The method according to claim 4 wherein R is represented by the formula
-(R⁶)CFCF₂-(CₚF₂ₚ)_{q}(C₂ClF₃)ᵣ-R_{f}-(C₂ClF₃)ᵣ-(CₚF₂ₚ)_{q}-CF₂CF(R⁶)-
in which R_{f} represents a perfluoroalkylene radical containing from 2 to 6 carbon atoms, R⁶ is fluorine or trifluoromethyl, the value of p is 2 or 3, r is 0 or a positive integer from 1 to 6, q is 0 or a positive integer from 1 to 6 and (r+q) is from 2 to 12.

6. The method according to claim 1 wherein said palladium catalyst is supported on alumina.

7. The method according to claim 1 wherein said dihydrosilane (II) is prepared by reacting a diorganodihalosilane having the structure R¹R²SiCl₂ with lithium aluminum hydride, in which R¹ and R² are independently selected from alkyl radicals having 1 to 12 carbon atoms, halogenated alkyl radicals having 3 to 12 carbon atoms, phenyl, C₁-C₄ alkyl-phenyl radicals and monovalent radicals derived from telomers or cotelomers of fluorinated organic olefins, with the proviso that there is no more than one phenyl group per silicon atom in said diorganodihalosilane and when at least one of R¹ and R² is halogenated alkyl, the halogen is not on the carbon atom in the alpha or beta position with respect to the silicon atom.

8. The method according to claim 1 wherein R is selected from the group consisting of a) -O(C₂H₄O)ₘ-, -O(C₃H₆O)ₘ-, -O(C₄H₈O)ₘ- and -O(C₆H₁₂O)ₘ-, in which m is an integer having a value of from 1 to 3, or b) branched or linear divalent hydrocarbon groups having from 2 to 8 carbon atoms.

9. The method according to claim 8 wherein R¹ and R² are independently selected from alkyl radicals having 1 to 12 carbon atoms, phenyl and halogenated alkyl radicals having 3 to 12 carbon atoms.

10. Hybrid-sila-organo-siloxane (co)polymers containing the unit
-R¹R²SiCₙH₂ₙRCₙH₂ₙSiR¹R²O- (VIa)
and, optionally, -R¹ₐ R²ₐ SiO- and/or -R¹ₐ R³ₐ SiO- units wherein R¹ and R² are independently selected from the group consisting of C₁-C₁₂ alkyls, phenyl and C₁-C₄ alkylphenyl; -CₙH₂ₙ- is a linear divalent radical wherein n is 2 or 3; R is selected from the group consisting of:
a1) -O(CₜH₂ₜO)ₘ- wherein t is an integer from 2 to 12, m is an integer from 1 to 6, with the proviso that no more than one phenyl group per silicon atom is present in the repeating unit (VIa);
b1) branched or linear divalent hydrocarbon groups having from 2 to 8 carbon atoms, with the proviso that in the repeating unit (VIa) no more than one phenyl group and no more than one methyl group per silicon atom is present and when R¹ is methyl then R² is C₅-C₁₂ alkyl, phenyl or C₁-C₄ alkyl-phenyl; R¹ₐ and R²ₐ are independently selected from C₁-C₁₂ alkyls, C₃-C₁₂ halogenated alkyls, phenyl, C₁-C₄ alkylphenyl, monovalent radicals derived from (co)telomers of fluorinated organic olefins; R³ₐ is a vinyl or an alkenyl radical.

11. Hybrid-sila-organo-siloxane (co)polymers according to claim 10, including the systems (A)ₓ, (AB)ₓ, (ABA)ₓ, (BAB)ₓ wherein
-A- represents the unit of formula (VIa);
-B- represents -R¹ₐ R²ₐ SiO- and/or -R¹ₐ R³ₐ SiO- units;
x represents the polymerization degree of each system having a value ranging from 10 to 1,000.

12. Hybrid-sila-organo-siloxane (co)polymers according to claim 10, in which R is selected from the structures -O(C₂H₄O)ₘ-, -O(C₃H₆O)ₘ-, -O(C₄H₈O)ₘ-, -O(C₆H₁₂O)ₘ-, wherein m is from 1 to 3.

13. Hybrid-sila-organo-siloxane (co)polymers according to claim 10, in which R is selected from branched or linear divalent hydrocarbon groups having from 2 to 4 carbon atoms.

14. Use of the hybrid-sila-organo-siloxane (co)polymers according to claims 10-13, for low temperature lubricants, rubbers and sealants.
